Europäisches Patentamt

European Patent Office

Office européen des brevets

(19)

(11) Veröffentlichungsnummer: **0 215 276 B1**

(12) # EUROPÄISCHE PATENTSCHRIFT

(45) Veröffentlichungstag der Patentschrift: 26.06.91

(21) Anmeldenummer: 86110941.1

(22) Anmeldetag: 07.08.86

(51) Int. Cl.⁵: **H04L 12/42**, H04L 1/16, H04L 12/18

(54) **Verfahren und Schaltungsanordnung zum Übertragen von Datensignalen an eine Gruppe von zu einem Ringleitungssystem gehörenden Steuereinrichtungen.**

(30) Priorität: 11.09.85 DE 3532468

(43) Veröffentlichungstag der Anmeldung:
25.03.87 Patentblatt 87/13

(45) Bekanntmachung des Hinweises auf die
Patenterteilung:
26.06.91 Patentblatt 91/26

(84) Benannte Vertragsstaaten:
AT BE CH DE FR GB IT LI LU NL SE

(56) Entgegenhaltungen:

AFIPS CONFERENCE PROCEEDINGS 1981
NATIONAL COMPUTER CONFERENCE, Seiten
209-214, AFIPS Press, Arlington, GB; W.Y.
CHENG et al.: "ILLINET - A 32 Mbits/sec.
local-area network"

(73) Patentinhaber: Siemens Aktiengesellschaft
Wittelsbacherplatz 2
W-8000 München 2(DE)

(72) Erfinder: Kerschner, Günther, Ing. grad.
Kemptenerstrasse 61
W-8000 München 71(DE)
Erfinder: Michels-Krohn, Karl-Heinz, Ing. grad.
Galileistrasse 2
W-8033 Martinsried(DE)
Erfinder: Untergruber, Josef, Ing. grad.
Heuberweg 17
W-8201 Nussdorf/Inn(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Schaltungsanordnung zum Übertragen von Datensignalen zwischen über ein taktgesteuertes, richtungsabhängig betriebenes Ringleitungssystem miteinander verbundenen Steuereinrichtungen nach dem Oberbegriff des Anspruchs 1 bzw. des Anspruchs 4.

Ein solches Verfahren bzw. eine solche Anordnung ist aus der AFIPS CONFERENCE PROCEEDINGS 1981 NATIONAL COMPUTER CONFERENCE, Seiten 209-214, AFIPS Press, Arlington, GB; W.Y. CHENG et al.: "ILLINET - A 32 Mbits/sec. local-area network" bekannt.

Es ist nun Aufgabe der vorliegenden Erfindung, einen Weg zu zeigen, wie bei einem Verfahren und einer Schaltungsanordnung der eingangs genannten Art Signalblöcke an eine Gruppe von Steuereinrichtungen und von dieser Gruppe von Steuereinrichtungen abzugebende Quittungssignale mit einem geringen Steuerungsaufwand über das Ringleitungssystem übertragen werden können.

Gelöst wird die vorstehend aufgezeigte Aufgabe bei einem Verfahren der eingangs genannten Art erfindungsgemäß durch die kennzeichnenden Merkmale des Anspruchs 1 und bei einer Anordnung der eingangs genannten Art durch die kennzeichnenden Merkmale des Anspruchs 4.

Zweckmäßigerweise bezeichnet die einem Signalblock beigefügte Empfängeradresse wahlweise sämtliche zu dem Ringleitungssystem gehörenden Steuereinrichtungen oder lediglich einen Teil dieser Steuereinrichtungen. Dies bietet einerseits die Möglichkeit, innerhalb des Ringleitungssystems Rundsende-Nachrichten an eine ausgewählte Gruppe von Steuereinrichtungen zu übertragen. Andererseits ist es aber auch in einfacher Weise möglich, sämtlichen Steuereinrichtungen des Ringleitungssystems einen festgelegten Signalblock zuzuführen, der die Steuereinrichtungen veranlaßt, sie betreffende Quittungssignale abzugeben, so daß beispielsweise in kürzester Zeit der Betriebszustand sämtlicher zu dem Ringleitungssystem gehörenden Steuereinrichtungen durch Auswerten der Quittungssignale ermittelt werden kann.

Eine vorteilhafte Ausgestaltung einer Schaltungsanordnung zur Durchführung des Verfahrens gemäß der vorliegenden Erfindung ergibt sich aus dem Patentanspruch 4. Diese Schaltungsanordnung weist einen für das Kopieren von Signalblöcken dienenden Empfangsspeicher und eine mit diesem verbundene Empfangssteuerung auf. Diese Empfangssteuerung steuert sowohl die Aufnahme und Weiterleitung von Signalblöcken, die für die Steuereinrichtung als Empfänger bestimmt sind, als auch die Aufnahme von durch die Quittungssignale ergänzten Signalblöcken.

Vorteilhafte Ausgestaltungen der Schaltungsanordnung gemäß Patentanspruch 4 ergeben sich aus den Patentansprüchen 5 bis 9. Ein Vorteil der den Empfangsspeicher betreffenden Ausgestaltungen besteht u.a. darin, daß durch Vorhandensein eines für den Ablauf von Schreib- und Lesevorgängen von zwei gesonderten Zähleranordnungen her steuerbaren Schreib-/Lese-Speichers eine Anpassung der Arbeitsgeschwindigkeit der Steuereinrichtungen an die Übertragungsgeschwindigkeit innerhalb des Ringleitungssystems möglich ist. Dabei ist es im Hinblick auf den Steuerungsaufwand zweckmäßig, daß der Schreib-/Lese-Speicher durch die Zähleranordnungen entsprechend dem Patentanspruch 6 umlaufend adressiert wird. Um bei dieser umlaufenden Adressierung des Schreib-/Lese-Speichers ein Überschreiben von bereits in ihm gespeicherten, jedoch noch nicht ausgelesenen Signalblöcken zu vermeiden, ist es vorteilhaft, eine Zähleranordnung gemäß Patentanspruch 7 vorzusehen, die den Füllstand des Schreib-/Lese-Speichers überwacht und bei Erreichen eines vorgegebenen Füllstandes die Aufnahme des gerade empfangenen Signalblockes durch eine entsprechende Beeinflussung der für die Abwicklung von Schreibvorgängen vorgesehenen Zähleranordnung abbricht. Eine lediglich einen geringen schaltungstechnischen Aufwand erfordernde Anordnung für die Steuerung der beiden zuletzt genannten Zähleranordnungen bei Abbruch der Aufnahme eines gerade empfangenen Signalblockes geht aus dem Patentanspruch 8 hervor.

Der Patentanspruch 9 bezieht sich auf eine vorteilhafte Ausgestaltung der bereits erwähnten Empfangssteuerung. Diese Empfangssteuerung zeichnet sich sowohl durch einen geringen schaltungstechnischen Aufwand als auch durch einen geringen Steuerungsaufwand aus.

Im folgenden wird die Erfindung anhand von Zeichnungen beispielsweise näher erläutert.

FIG 1      zeigt in einem Blockschaltbild ein aus einem Ringleitungssystem gebildetes Datenvermittlungssystem, bei dem die Erfindung angewandt ist,

FIG 2      zeigt in einem Blockschaltbild ausschnittweise den Aufbau einer der in FIG 1 lediglich schematisch dargestellten Schnittstellenschaltungen und den Aufbau einer mit dieser verbundenen Vermittlungseinheit bzw. Leitungsanschlußeinheit,

FIG 3      zeigt den Aufbau einer in der Schnittstellenschaltung gemäß FIG 2 vorhandenen Empfangspuffer-Anordnung,

FIG 4      zeigt den Aufbau einer der Empfangspuffer-Anordnung gemäß FIG 3 zugehörigen Empfangssteuerung und

FIG 5    gibt die Struktur von Signalblöcken wieder, welche über das Ringleitungssystem übertragen werden.

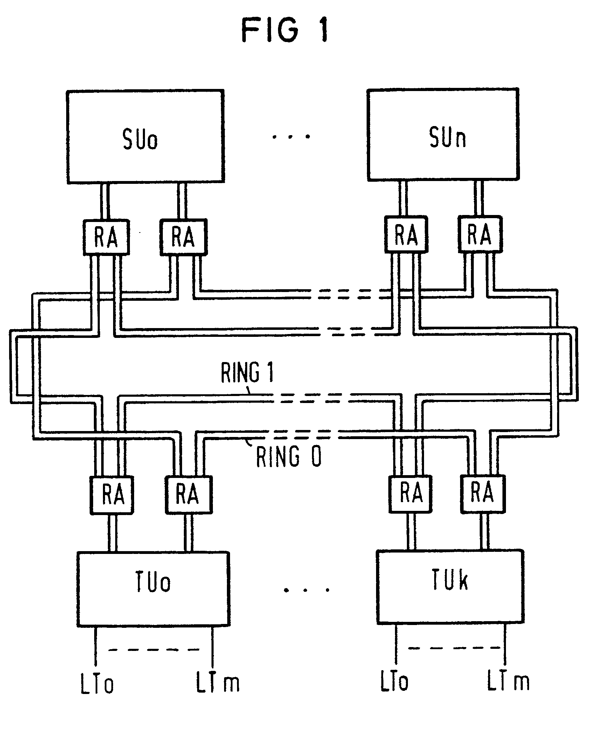

In FIG 1 ist ein Datenvermittlungssystem mit einer Mehrzahl von Vermittlungseinheiten SU0 bis SUn dargestellt. Diese Vermittlungseinheiten führen nach dem Lastteilungsprinzip die für die Übertragung von Datensignalen erforderlichen Vermittlungsfunktionen aus. Die Vermittlungseinheiten sind dafür gemeinsam an ein Ringleitungssystem angeschlossen. Ein solches Ringleitungssystem kann aus einer einzigen geschlossen Ringleitungsanordnung bestehen. Ein solches Ringleitungssystem kann jedoch auch, wie in FIG 1 beispielsweise dargestellt, aus zwei parallel verlaufenden, voneinander unabhängigen Ringleitungsanordnungen RING0 und RING1 aufgebaut sein. Durch eine solche Redundanz ist es beispielsweise bei Ausfall einer der Ringleitungsanordnungen möglich, die Übertragung von Signalblöcken und Quittungssignalen auf der jeweils anderen Ringleitungsanordnung auszuführen.

Der Anschluß der genannten Vermittlungseinheiten SU0 bis SUn an die beiden Ringleitungsanordnungen erfolgt jeweils über eine für jede der Ringleitungsanordnungen gesonderte Schnittstellenschaltung RA, auf die im folgenden noch näher eingegangen wird.

Mit den genannten Ringleitungsanordnungen RING0 und RING1 ist außerdem eine Mehrzahl von Leitungsanschlußeinheiten TU0 bis TUk jeweils wieder über eine für jede der Ringleitungsanordnungen gesonderte Schnittstellenschaltung RA verbunden. Diese Leitungsanschlußeinheiten dienen zusammen mit den zugehörigen Schnittstellenschaltungen für die Datensignalübertragung zwischen den genannten Vermittlungseinheiten und mit Teilnehmereinrichtungen verbundenen Übertragungsleitungen, die an die Leitungsanschlußeinheiten TU0 bis TUk angeschlossen sind. Jede der Leitungsanschlußeinheiten weist für einen solchen Anschluß von Übertragungsleitungen eine Mehrzahl von Leitungsanschlüssen LT0 bis Ltm auf.

Die aus den genannten Vermittlungseinheiten bzw. den Leitungsanschlußeinheiten und den zugehörigen Schnittstellenschaltungen gebildeten Schaltungseinheiten werden im folgenden auch als Steuereinrichtungen bezeichnet. Für den Fall, daß das Ringleitungssystem lediglich aus einer einzigen Ringleitungsanordnung besteht, gehört zu einer Steuereinrichtung lediglich eine einzige Schnittstellenschaltung.

Innerhalb des in FIG 1 dargestellten Vermittlungssystems, d. h. zwischen den Vermittlungseinheiten und den Leitungsanschlußeinheiten erfolgt die Übertragung von Datensignalen in Form von Signalblöcken, welche jeweils als Datensignale im Zuge des Aufbaus einer Verbindung Signalisierungsinformationen und bei einer eingerichteten Verbindung die zwischen den in Frage kommenden Teilnehmereinrichtungen zu übertragenden Nachrichtensignale aufweisen. Dabei enthält jeder zu übertragende Signalblock neben den eigentlichen Datensignalen, die jeweils aus einer Mehrzahl von Bits, z. B. 8 Bits, gebildet sind, eine mindestens eine der Steuereinrichtungen als Empfänger bezeichnende Empfängeradresse, eine den Beginn eines Signalblockes bezeichnende Anfangskennung, eine das Ende eines Signalblockes bezeichnende Endekennung, eine die den Signalblock abgebende Steuereinrichtung als Sender bezeichnende Senderadresse und mindestens ein Quittungssignal bzw. eine Leerquittung. Ein derartig aufgebauter Signalblock, auf den im folgenden noch näher eingegangen wird, kann dabei nur dann an eine der Ringleitungsanordnungen abgegeben werden, wenn zuvor von der in Frage kommenden Steuereinrichtung ein von Steuereinrichtung zu Steuereinrichtung übertragenes, diese jeweils in einen Sendeberechtigungszustand steuerndes Sendeberechtigungssignal empfangen wurde.

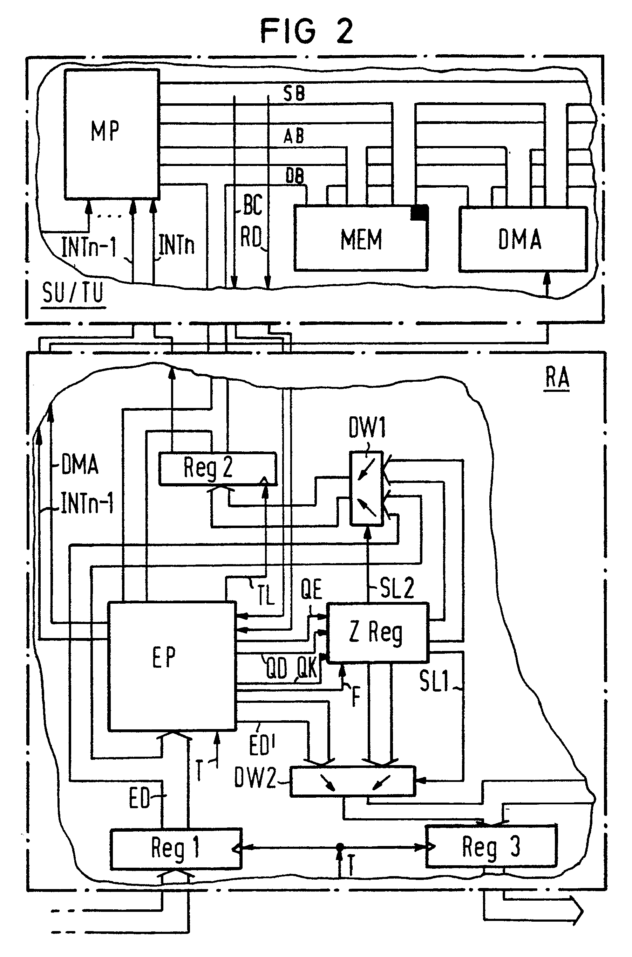

In FIG 2 ist der Aufbau einer Steuereinrichtung detaillierter dargestellt. Wie bereits oben erwähnt, besteht eine solche Steuereinrichtung entweder aus einer Vermittlungseinheit oder aus einer Leitungsanschlußeinheit, in FIG 2 durch die Bezeichnung SU/TU angedeutet, und einer der Anzahl der Ringleitungsanordnungen entsprechenden Anzahl von Schnittstellenschaltungen RA. Dabei ist in FIG 2 lediglich eine dieser Schnittstellenschaltungen gezeigt, da sämtliche mit den Vermittlungseinheiten bzw. Leitungsanschlußeinheiten verbundenen Schnittstellenschaltungen intern den gleichen Aufbau aufweisen.

Die in FIG 2 mit SU/TU bezeichnete, ausschnittweise dargestellte Einheit (Vermittlungseinheit oder Leitungsanschlußeinheit) weist eine sowohl Sende- als auch Empfangsvorgänge steuernde Mikroprozessoranordnung auf. Von dieser Mikroprozessoranordnung sind dargestellt ein Mikroprozessor MP, eine Festwertspeicher (Programmspeicher) und Schreib-/Lese-Speicher umfassende Speicheranordnung MEM und eine Einrichtung für einen direkten Speicherzugriff DMA. Die Speicheranordnung und die zuletzt genannte Einrichtung stehen dabei über ein Busleitungssystem mit dem Mikroprozessor MP in Verbindung. Das Busleitungssystem besteht aus einem Datenbus DB, einem Adressbus AB und einem Steuerbus SB. Über den Datenbus und über die mit RD und BC bezeichneten Leitungen des Steuerbusses steht auch die Schnittstellenschaltung RA mit dem Mikroprozessor MP in Verbindung. Weiterhin führen zwei mit INTn-1 und INTn bezeichnete Steuerleitungen der Schnittstellenschaltung zu Unterbrechungseingängen INTn-1 und INTn des Mikroprozessors MP hin. Schließlich ist die Schnittstellenschaltung RA noch über eine weitere mit DMA bezeichnete Leitung mit der Einrichtung für einen direkten Speicherzugriff DMA verbunden.

Eine Schnittstellenschaltung RA weist sowohl Einrichtungen für die Behandlung empfangener Signalblöcke und Quittungssignale als auch Einrichtungen für das Aussenden von in der zugehörigen Steuereinrichtung bereitstehenden Signalblöcken auf. In FIG 2 sind von diesen Einrichtungen lediglich die auf die vorliegende Erfindung sich beziehenden Einrichtungen für die Behandlung empfangener Signalblöcke und Quittungssignale dargestellt.

Die in FIG 2 dargestellte Schnittstellenschaltung RA weist an der Schnittstelle zu der zugehörigen Ringleitungsanordnung, die beispielsweise die Ringleitungsanordnung RING0 sein möge, ein Empfangsregister Reg1 auf, welches in paralleler Form über die Ringleitungsanordnung übertragene Signale zugeführt erhält. Gesteuert wird dieses Register dazu von einem Taktgenerator her, welcher über eine Leitung T der Übertragungsgeschwindigkeit der Ringleitungsanordnung entsprechende Taktsignale einem Takteingang des Eingangsregisters Reg1 zuführt. Dieses Eingangsregister ist ausgangsseitig über eine Leitungsanordnung ED einerseits mit einer Empfangspuffer-Anordnung EP und andererseits mit ersten Eingängen einer Datenweiche DW1 verbunden. Die Empfangspuffer-Anordnung dient dabei, wie im folgenden noch erläutert werden wird, für die Aufnahme von Signalblöcken und Quittungssignalen sowie für deren Weiterleitung an die im Ringleitungssystem nachfolgende Steuereinrichtung.

Die Empfangspuffer-Anordnung EP steht über den Datenbus DB, die bereits erwähnten Leitungen RD und BC des Steuerbusses SB und über die Leitungen DMA und INTn-1 mit der Einheit SU/TU in Verbindung. Die Empfangspuffer-Anordnung erhält über die bereits erwähnte Leitung T Taktsignale zugeführt und gibt selbst Steuersignale über Leitungen QE, QD, QK und F an ein Zustandsregister ZReg und über eine Leitung TL an einen Takteingang eines als Quittungsempfänger dienenden Registers Reg2 ab. Die Empfangspuffer-Anordnung steht schließlich noch über eine Leitungsanordnung ED' mit ersten Eingängen einer weiteren Datenweiche DW2 in Verbindung.

Zweite Eingänge der gerade erwähnten Datenweiche DW2 und der Datenweiche DW1 sind mit Ausgängen des Zustandsregisters ZReg verbunden. Beide Datenweichen werden dabei von dem Zustandsregister her über die Leitungen SL1 und SL2 gesteuert. Ausgangsseitig ist die Datenweiche DW1 an Signaleingänge des bereits erwähnten Registers Reg2 angeschlossen, welches mit seinen Signalausgängen mit dem Datenbus DB verbunden ist. Die Datenweiche DW2 ist dagegen ausgangsseitig an Signaleingänge eines Ausgangsregisters Reg3 angeschlossen. Dieses Register erhält über die Leitung T Taktsignale zugeführt und gibt an seinen Signalausgängen von der Datenweiche DW2 her zugeführte Signale an die mit der Schnittstellenschaltung RA verbundene Ringleitungsanordnung ab. Die Signaleingänge des Ausgangsregisters stehen im übrigen auch noch mit Einrichtungen für das Aussenden von in der zugehörigen Steuereinrichtung bereitstehenden Signalblöcken in Verbindung. Wie jedoch bereits erwähnt, wird auf den Aufbau dieser Einrichtungen nicht näher eingegangen.

Im folgenden wird nun zunächst das Zusammenwirken der in FIG 2 dargestellten Schaltungsteile bei der Aufnahme und Weiterleitung von Signalblöcken und Quittungssignalen erläutert, ehe auf den Aufbau der Empfangspuffer-Anordnung EP näher eingegangen wird.

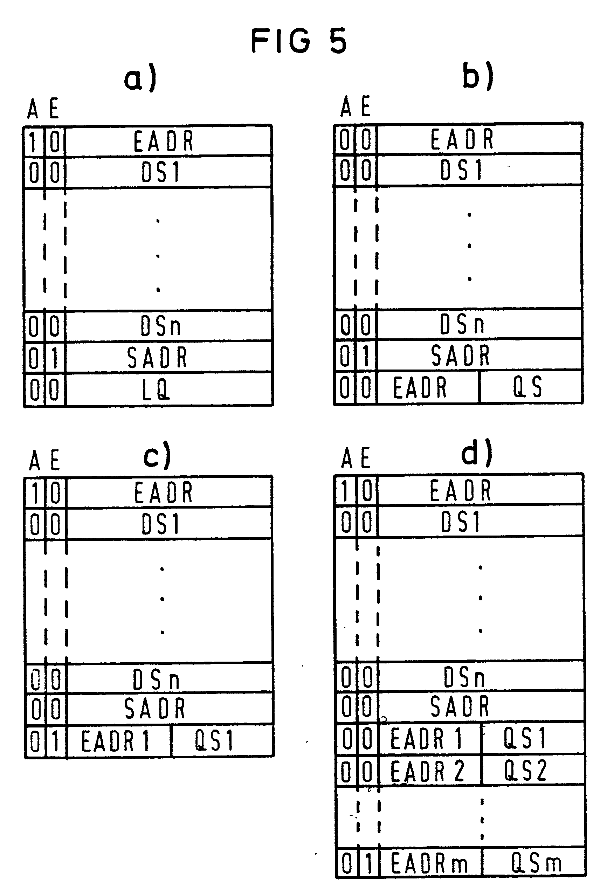

Innerhalb des Ringleitungssystems können Datensignale wahlweise an eine einzige als Empfänger ausgewählte Steuereinrichtung oder an eine Gruppe von Steuereinrichtungen übertragen werden. Es wird dabei zunächst davon ausgegangen, daß Datensignale von einer Steuereinrichtung des Ringleitungssystems her lediglich an eine einzige Steuereinrichtung zu übertragen sind. Für diese Übertragung stellt die Steuereinrichtung, von der die Datensignale abzugeben sind, die Datensignale in der zugehörigen Einheit SU/TU zu einem Signalblock zusammen. Ein derartiger Signalblock ist in FIG 5a schematisch dargestellt. Er wird durch eine die als Empfänger ausgewählte Steuereinrichtung bezeichnende Empfängeradresse EADR eingeleitet. Dieser Empfängeradresse folgen die zu übertragenden Datensignale DS1 bis DSn. Angefügt ist diesen Datensignalen eine die diesen Signalblock sendende Steuereinrichtung als Sender bezeichnende Senderadresse SADR. Der Signalblock wird schließlich durch eine vom Sender vorbereitete Leerquittung LQ abgeschlossen. Den genannten Signalen eines Signalblockes sind jeweils u. a. zwei Kennbits beigefügt. Ein erstes, in FIG 5 mit A bezeichnetes Kennbit dient zur Kennzeichnung des Anfangs eines Signalblockes. In entsprechender Weise dient das mit E bezeichnete Kennbit zur Kennzeichnung des Endes eines Signalblockes. Der Anfang und das Ende eines Signalblockes mögen dabei beispielsweise durch den logischen Zustand "1" des jeweiligen Kennbits angezeigt werden. Der logische Zustand "1" des Kennbits A wird im folgenden als Blockanfangskennung und der logische Zustand "1" des Kennbits E als Blockendekennung bezeichnet. Wie in FIG 5a dargestellt, wird die Blockanfangskennung zusammen mit der Empfängeradresse und die Blockendekennung zusammen mit der Senderadresse übertragen.

Ein in der gerade beschriebenen Weise zusammengestellter Signalblock wird anschließend bei Eintreffen eines von Steuereinrichtung zu Steuereinrichtung übertragenen, diese jeweils in einen Sendeberechtigungszustand steuernden Sendeberechtigungssignals von der Einheit SU/TU (FIG 2) her über das Ausgangsregister Reg3 an die mit der Schnittstellenschaltung RA verbundene Ringleitungsanordnung abgegeben. Jede der mit der Ringleitungsanordnung verbundenen Schnittstellenschaltungen nimmt die zu dem übertragenen Signalblock gehörenden Signale über das Eingangsregister Reg1 auf. Dabei wird zunächst mit Hilfe der der jeweiligen Steuereinrichtung zugehörigen Empfangspuffer-Anordnung EP ein Vergleich der in dem Signalblock zusammen mit der Blockanfangskennung übertragenen Empfängeradresse mit der der jeweiligen Steuereinrichtung innerhalb des Ringleitungssystems zugewiesenen Adresse durchgeführt. Ergibt der Vergleich keine Übereinstimmung der miteinander verglichenen Adressen, so leitet die jeweilige Empfangspuffer-Anordnung EP den empfangenen Signalblock unverändert über die Leitungsanordnung ED' an die Datenweiche DW2 weiter. Über diese und das Ausgangsregister Reg3 gelangt dann der Signalblock wieder auf die Ringleitungsanordnung.

Ergibt dagegen der Adressenvergleich eine Übereinstimmung der miteinander verglichenen Adressen, so wird der gerade empfangene Signalblock in der Empfangspuffer-Anordnung EP kopiert. Der Signalblock selbst wird unter Löschung der Blockanfangskennung (A) über die Leitungsanordnung ED' an die im Ringleitungssystem folgende Steuereinrichtung weitergeleitet. Bei diesem Weiterleiten fügt das Zustandsregister ZReg an die Senderadresse (SADR) noch ein Quittungssignal (EADR, QS) an, so daß die ursprünglich in dem Signalblock enthaltene Leerquittung (LQ) überschrieben wird. Für dieses Anfügen erhält das Zustandsregister ZReg von der Empfangspuffer-Anordnung EP, die das Auftreten der Blockendekennung (E) und der Senderadresse (SADR) überwacht, ein Steuersignal über die Leitung QE zugeführt. Der weitergeleitete Signalblock ist in FIG 5b dargestellt.

Nach dem erwähnten Kopieren eines Signalblockes gibt die Empfangspuffer-Anordnung EP ein das Bereitstehen eines empfangenen Signalblockes anzeigendes Steuersignal über die Leitung DMA an die Einrichtung für einen direkten Speicherzugriff DMA ab. Diese Einrichtung bewirkt dann die Übernahme des betreffenden Signalblockes in die Einheit SU/TU. Das Ende des Signalblockes wird dabei dem Mikroprozessor MP durch ein Unterbrechungssignal an seinem Unterbrechungseingang INTn-1 von der Empfangspuffer-Anordnung EP her angezeigt.

Da die ursprünglich in dem Signalblock übertragene Blockanfangskennung (A) bei dessen Weiterleitung gelöscht ist, wird der Signalblock als solcher nicht mehr erkannt, so daß er von nachfolgenden Steuereinrichtungen nicht aufgenommen werden kann. Lediglich die zusammen mit der Blockendekennung (E) übertragene Senderadresse (SADR) ist noch als solche erkennbar. Das Auftreten von Blockendekennung und Senderadresse wird in der Steuereinrichtung, von der der gerade quittierte Signalblock zuvor abgegeben worden ist, überwacht, und zwar in der zugehörigen Empfangspuffer-Anordnung EP. Wird das Auftreten von Blockendekennung und Senderadresse von dieser erkannt, so gibt sie über die Leitung TL ein Steuersignal an das zugehörige Quittungsregister Reg2 ab, das daraufhin das nach der Senderadresse übertragene Quittungssignal QS von der Leitungsanordnung ED über die Datenweiche DW1 aufnimmt. Auf die Aufnahme eines solchen Quittungssignals hin gibt das Quittungsregister ein Unterbrechungssignal über die Leitung INTn an den Mikroprozessor MP ab. Dieser übernimmt dann aufgrund dieses Signals das in dem Quittungsregister bereitstehende Quittungssignal für eine Auswertung. Damit ist ein Sendevorgang abgeschlossen.

Es wird nun noch der Fall betrachtet, daß ein Signalblock an eine Gruppe von Steuereinrichtungen zu übertragen ist. Auch dafür wird zunächst in der den Signalblock abgebenden Steuereinrichtung ein Signalblock in der in FIG 5a dargestellten Weise zusammengestellt und an die Ringleitungsanordnung abgegeben. Ein Unterschied besteht lediglich darin, daß durch die Empfängeradresse (EADR) nunmehr eine Gruppe von Steuereinrichtungen bezeichnet ist. Dabei kann eine Gruppe wahlweise sämtliche zu der Ringleitungs anordnung gehörenden Steuereinrichtungen oder lediglich einen Teil dieser Steuereinrichtungen umfassen.

Mit der Abgabe des Signalblockes an die Ringleitungsanordnung gibt der Mikroprozessor MP der betreffenden Steuereinrichtung im übrigen noch ein Rundsendesignal BC über die gleichbezeichnete Leitung an die Empfangspuffer-Anordnung EP ab. Mit diesem Rundsendesignal wird angezeigt, daß ein Signalblock an eine Gruppe von Steuereinrichtungen abgegeben worden ist.

Die Übertragung des Signalblockes erfolgt wieder in der dargestellten Weise von Steuereinrichtung zu Steuereinrichtung. Nicht durch die Empfängeradresse bezeichnete Steuereinrichtungen leiten dabei den empfangenen Signalblock unverändert weiter. Die erste zu der durch die Empfängeradresse bezeichnete Gruppe gehörende Steuereinrichtung kopiert dagegen den empfangenen Signalblock in der zugehörigen Empfangspuffer-Anordnung EP. Der Signalblock selbst wird unter Weglassen der bisherigen Blockendekennung (E) an die in der Ringleitungsanordnung folgende Steuereinrichtung weitergeleitet. Bei diesem Weiterleiten fügt das Zustandsregister ZReg auf ein von der Empfangspuffer-Anordnung abgegebenes Steuersignal hin, welches über die Leitung QK übertragen wird, noch eine Quittungsinformation zusammen mit einer Blockendekennung an die Senderadresse (SADR) an. Die Quittungsinformation besteht dabei aus der der betreffenden Steuereinrichtung innerhalb der Ringleitungsanordnung zugewiesenen Adresse (EADR1) und dem eigentlichen, den Empfang des Signalblockes betreffenden Quittungssignal (QS1). Der von der ersten zu der Gruppe gehörenden Steuereinrichtung abgegebene Signalblock ist in FIG 5c dargestellt. Für das gerade erwähnte Anfügen der Quittungsinformation und der Blockendekennung wird im übrigen die in FIG 2 dargestellte Datenweiche DW2 über die Leitung SL1 von dem Zustandsregister ZReg her entsprechend gesteuert.

Auch in den weiteren zu der Gruppe gehörenden Steuereinrichtungen wird der empfangene Signalblock kopiert und unter Weglassen der bisherigen Blockendekennung an die im Ringleitungssystem folgende Steuereinrichtung weitergeleitet. Dabei wird jeweils wieder eine Quittungsinformation und eine Blockendekennung an die bisher letzte in dem Signalblock übertragene Quittungsinformation angefügt. Der von der m-ten zu der Gruppe gehörenden Steuereinrichtung abgegebene Signalblock ist in FIG 5d dargestellt. Daraus ergibt sich, daß der Signalblock, den die letzte zu der Gruppe gehörende Steuereinrichtung abgibt, Quittungsinformationen für sämtliche zu der Gruppe gehörenden Steuereinrichtungen aufweist.

Der die Quittungssignale sämtlicher zu der Gruppe gehörenden Steuereinrichtungen enthaltende Signalblock wird in diejenige Steuereinrichtung übernommen, von der der ursprüngliche Signalblock abgegeben worden ist. Diese Übernahme kann wiederum in Form eines Kopiervorganges in der zugehörigen Empfangspuffer-Anordnung EP erfolgen, der mit der ursprünglichen Abgabe des Signalblockes ein Rundsendesignal BC zugeführt worden ist. Eingeleitet wird dabei der Kopiervorgang auf das Auftreten der Blockanfangskennung zusammen mit dem Rundsendesignal hin. Der Signalblock selbst wird unter Löschung sowohl der Blockanfangskennung als auch der Blockendekennung über das Ausgangsregister Reg3 wieder an die zugehörige Ringleitungsanordnung abgegeben. Da beide Kennungen nunmehr gelöscht sind, kann der weitergeleitete Signalblock durch die in der Ringleitungsanordnung nachfolgenden Steuereinrichtungen nicht mehr erkannt werden.

Nach dem Kopieren des Signalblockes einschließlich der Quittungsinformationen, d. h. bei Auftreten der diesem Signalblock zugehörigen Blockendekennung, gibt die Empfangspuffer-Anordnung EP über die Leitung QD ein Steuersignal an das zugehörige Zustandsregister ZReg ab. Dieses Zustandsregister stellt daraufhin ein den Empfang dieses Signalblockes betreffendes Quittungssignal bereit, welches über die Datenweiche DW1 in das Quittungsregister Reg2 übernommen wird. Für diese Übernahe erhält das Quittungsregister von der Empfangspuffer-Anordnung über die Leitung TL ein entsprechendes Steuersignal zugeführt. Außerdem wird für diese Übernahme die Datenweiche DW1 von dem Zustandsregister ZReg her über die Leitung SL2 entsprechend gesteuert.

Die Übernahme des in das Quittungsregister Reg2 übertragenen Quittungssignals und des in der Empfangspuffer-Anordnung EP sich befindenden Signalblockes in die Einheit SU/TU erfolgt wieder in der bereits oben angegebenen Weise. Nach dieser Übernahme erfolgt in der Einheit SU/TU eine Auswertung sämtlicher übernommenen Quittungssignale. Außerdem wird das von der zugehörigen Steuereinrichtung empfangene Sendeberechtigungssignal an die in der Ringleitungsanordnung folgende Steuereinrichtung weitergeleitet.

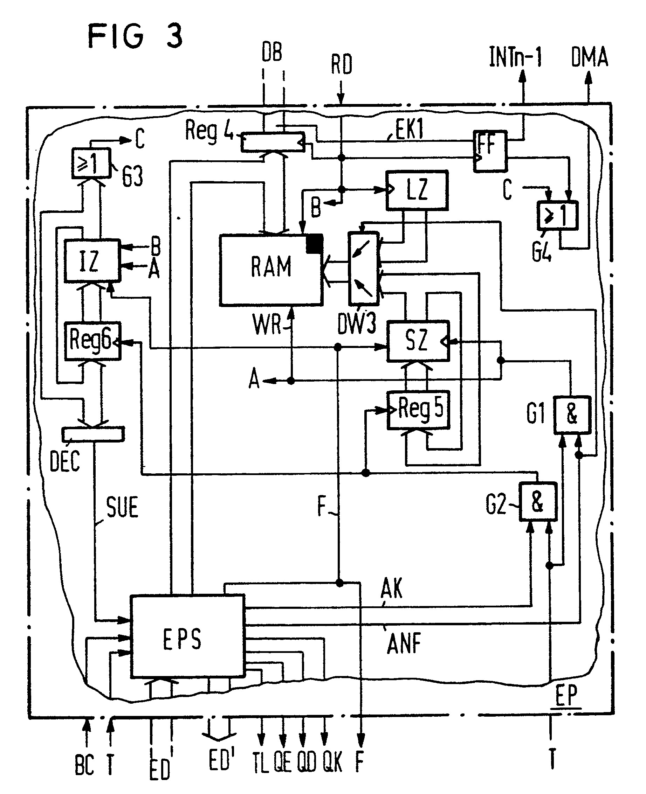

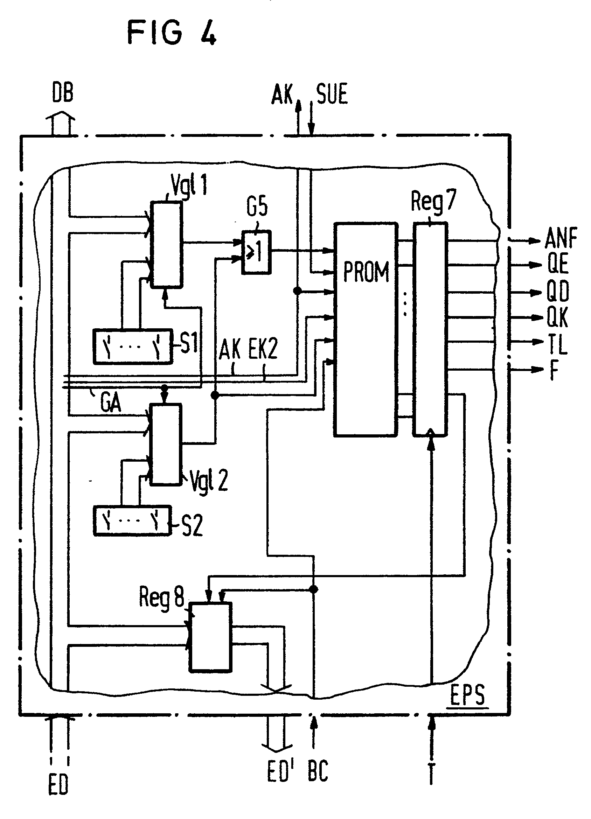

Im folgenden wird nun noch unter Bezugnahme auf die Figuren 3 und 4 auf den Aufbau der in FIG 2 mit EP bezeichneten Empfangspuffer-Anordnung näher eingegangen. Wie in FIG 3 dargestellt, enthält die Empfangspuffer-Anordnung einen Schreib-/Lese-Speicher RAM mit einer Mehrzahl von Speicherzellen für die Aufnahme von Signalblöcken einschließlich der jeweils zugehörigen Blockendekennungen. Dieser Speicher ist mit seinen Datensignalein-/Ausgängen einerseits für die Aufnahme von Signalblöcken mit der in FIG 2 bereits dargestellten Leitungsanordnung ED und andererseits für eine Abgabe von Signalblöcken über ein Register Reg4 mit dem ebenfalls bereits in FIG 2 bereitgestellten Datenbus DB verbunden. Für die Abgabe eines Signalblockes erhält er dabei Lesetakte über die zu dem Steuerbus SB gehörende Leitung RD zugeführt. Diese Lesetakte entsprechen der Arbeitsgeschwindigkeit der jeweiligen Steuereinrichtung.

Für die Aufnahme von Signalblöcken erhält der Schreib-/Lese-Speicher RAM dagegen an einem Eingang WR Schreibtakte zugeführt. Diese Schreibtakte treten auf der Leitung T auf und werden über ein UND-Glied G1 an den genannten Eingang des Speichers abgegeben. Dieses UND-Glied wird durch ein auf einer Leitung ANF auftretendes Steuersignal in den übertragungsfähigen Zustand gesteuert. Abgegeben wird dieses Steuersignal dabei von einer Empfangssteuerung EPS her.

Der Schreib-/Lese-Speicher ist mit seinen Adresseneingängen über eine Datenweiche DW3 zum einen mit einem Zähler LZ und zum anderen mit einem Zähler SZ verbunden. Der als Schreibzähler dienende Zähler SZ ist mit seinem Takteingang an den Ausgang des bereits erwähnten UND-Gliedes G1 angeschlossen, d. h. er erhält gleichzeitig mit dem Schreib-/Lese-Speicher RAM die Schreibtakte zugeführt. Seine nach Maßgabe dieser Schreibtakte sich ändernde Zählerstände gibt der Zähler SZ bei Aufnahme eines Signalblockes an seinen Zählerausgängen als Adressensignale für den Schreib-/Lese-Speicher ab. Diese Zählerausgänge stehen außerdem mit einem Register Reg5 in Verbindung, welches über ein UND-Glied G2 ein Übernahmetakt zugeführt erhält. Dieses UND-Glied ist eingangsseitig mit der Leitung T und einer an die Empfangssteuerung EPS angeschlossenen Leitung AK verbunden. Ausgangsseitig steht das Register Reg5 mit Setzeingängen des Zähler SZ in Verbindung. Diese Setzeingänge werden durch ein auf einer leitung F auftretendes, von der Empfangssteuerung EPS abgegebenes Setzsignal freigegeben.

Der Zähler LZ dient als Lesezähler. Er erhält die auf der Leitung RD auftretenden Lesetakte an seinem Takteingang zugeführt und gibt seinen nach Maßgabe dieser Lesetakte sich ändernde Zählerstände als Adressensignale beim Auslesen eines Signalblockes an den Schreib-/Lese-Speicher RAM ab.

Die mit den beiden genannten Zählern verbundene Datenweiche DW3 ist im übrigen mit ihrem Steuereingang ebenfalls mit der Leitung ANF verbunden.

Die Empfangspuffer-Anordnung EP weist einen weiteren Zähler IZ auf. Bei diesen Zähler handelt es sich um einen Vor-/Rückwärtszähler, welcher für das Zählen in der einnen Richtung vom Ausgang des UND-Gliedes G1 her Schreibtakte und für das Zählen in der anderen Richtung die auf der Leitung RD auftretenden Lesetakte zugeführt erhält. Ausgangsseitig ist der Zähler IZ mit Eingängen eines Decodierers DEC verbunden, welcher bei einem bestimmten Zählerstand des Zählers IZ über eine Leitung SUE ein Meldesignal an die Empfangssteuerung EPS abgibt.

Der Zähler IZ ist ausgangsseitig außerdem mit einem Register Reg6 und mit einem ODER-Glied G3 verbunden. Das Register Reg6 erhält an einem Takteingang von dem UND-Glied G2 her ein Übernahmetakt zugeführt. Ausgangsseitig ist dieses Register mit Setzeingängen des Zählers IZ verbunden, die wieder durch ein auf der Leitung F auftretendes Setzsignal freigegeben werden.

Der Ausgang des zuvor genannten ODER-Gliedes G3 ist mit ersten Eingängen eines ODER-Gliedes G4 verbunden. Mit einem weiteren Eingang ist dieses ODER-Glied an den negierenden Ausgang einer Kippstufe FF angeschlossen. Der Ausgang des ODER-Gliedes G4 ist mit der Leitung DMA verbunden. Der nichtnegierende Ausgang der Kippstufe FF ist dagegen an die Leitung INTn-1 angeschlossen. Der Takteingang dieser Kippstufe erhält die auf der Leitung RD auftretenden Lesetakte zugeführt. Der Dateneingang der Kippstufe ist dagegen mit der die Blockendekennung führenden Leitung EK des Datenbusses DB verbunden.

Die bereits erwähnte Empfangssteuerung EPS steht mit einer Mehrzahl der in FIG 2 angegebenen Leitungen in Verbindung. Eingangsseitig sind dies die Leitungsanordnung ED sowie die Leitungen BC und T. Ausgangsseitig besteht eine Verbindung einerseits zu der Leitungsanordnung ED' und andererseits zu den Leitungen TL, QE, QD, QK, und F.

In der in FIG 3 dargestellten Empfangspuffer-Anordnung EP laufen folgende Steuerungsvorgänge ab. Bei Auftreten einer Blockanfangskennung zusammen mit einer die zugehörige Steuereinrichtung bezeichnenden Empfängeradresse gibt die Empfangssteuerung EPS ein Steuersignal über die Leitung ANF ab. Aufgrund des Steuersignals werden dem Schreib-/Lese-/Speicher RAM sowie den beiden Zählern SZ und IZ Schreibimpulse für die Aufnahme eines empfangenen Signalblockes über das UND-Glied G1 zugeführt. Beide Zähler mögen sich dabei zunächst in einem Grundzählerstand befinden, der beispielsweise der Zählerstand "0" sein möge. Mit jedem Schreibtakt wird dann der Zählerstand verändert, wobei mit dem sich ändernden momentanen Zählerstand des Zähler SZ die Speicherzellen des Schreib-/Lese-Speichers RAM fortlaufend adressiert werden, während der momentane Zählerstand des Zählers IZ dem momentanen Füllstand des Schreib-/Lese-Speichers entspricht. Die Aufnahme von zu einem Signalblock gehörenden Signale erfolgt nun so lange, bis mit dem Auftreten der zu dem Signalblock gehörenden Blockendekennung von der Empfangssteuerung EPS her ein das UND-Glied G1 sperrendes Steuersignal über die Leitung ANF übertragen wird, so daß die weitere Abgabe von Schreibtakten verhindert wird. Der zu diesem Zeitpunkt von den beiden Zählern SZ und IZ gerade abgegebene momentane Zählerstand bleibt dabei erhalten.

Wie bereits in Verbindung mit der FIG 2 erläutert wurde, wird das Vorliegen eines empfangenen Signalblockes der Einheit SU/TU durch ein über die Leitung DMA übertragene Steuersignal angezeigt. Der in dem Schreib-/Lese-Speicher sich befindende Signalblock wird daraufhin durch Zuführen von Lesetakten über die Leitung RD und fortlaufende Adressierung der Speicherzellen des Schreib-/Lese-Speichers von dem Zähler LZ her durch einen direkten Speicherzugriff über das Register Reg4 in die Einheit SU/TU übernommen, und zwar bis zum Auftreten der im gerade ausgelesenen Signalblock enthaltenen Blockendekennung. Diese Blockendekennung tritt auf der Leitung EK1 des Datenbusses DB auf. Dieses Auftreten überführt die Kippstufe FF in ihren aktiven Zustand, in welchem sie dem Mikroprozessor das Ende eines Signalblockes über die Leitung INTn-1 signalisiert. Der Mikroprozessor unterbricht daraufhin die Zuführung von weiteren Lesetakten. Außerdem wird durch die Kippstufe FF das über die Leitung DMA übertragene Steuersignal für einen direkten Speicherzugriff unterbrochen.

Der Zähler LZ möge im übrigen auch zunächst von einem vorgegebenen Grundzählerstand aus zu zählen beginnen, der ebenfalls der Zählerstand "0" sein möge. Der dann bei Auftreten der Blockendekennung von dem Zähler LZ gerade abgegebene momentane Zählerstand bleibt bis zur Einleitung eines weiteren Lesevorganges erhalten.

Bei Auslesen eines Signalblockes aus dem Schreib-/Lese-Speicher RAM werden die Lesetakte außerdem dem Zähler IZ zugeführt. Diese Lesetakte bewirken ein Zählen in Rückwärtsrichtung, so daß sich mit jedem Lesetakt der momentane Zählerstand dieses Zählers verringert. Damit entspricht der momentane Zählerstand der Anzahl der Signale des Signalblockes, die noch nicht aus dem Schreib-/Lese-Speicher ausgelesen worden sind. Bei Erreichen des Zählerstandes "0", welcher den Leerzustand des Schreib-/Lese-Speichers anzeigt, wird das ODER-Glied G4 gesperrt, so daß die Zuführung des über die Leitung DMA übertragenen Steuersignals unterbrochen wird.

Werden nun weitere Signalblöcke empfangen, so laufen ebenfalls wieder die bereits erläuterten Steuerungsvorgänge ab. Ein Unterschied besteht lediglich darin, daß nunmehr die Zähler SZ, LZ und IZ von ihren noch anstehenden Zählerständen aus weiterzählen. Mit anderen Worten, die Anfangszählerstände dieser Zähler entsprechen nun den bei der Übernahme bzw. beim Auslesen von Signalblöcken zuletzt erreichten Zählerständen. Das erneute Einschreiben von Signalblöcken in den Schreib-/Lese-Speicher kann im übrigen auch bereits zu einem Zeitpunkt erfolgen, zu dem zuvor empfangene Signalblöcke noch nicht oder noch nicht vollständig in die Einheit SU/TU übernommen werden konnten. In diesem Fall hat die Aufnahme eines gerade empfangenen Signalblockes Vorrang vor dem Auslesen zuvor empfangener Signalblöcke. Bei der Aufnahme von Signalblöcken verändert im übrigen der Zähler IZ seinen Zählerstand entsprechend der Anzahl der durch Signale der Signalblöcke belegten und noch nicht ausgelesenen Speicherzellen des Schreib-/Lese-Speichers RAM.

Bei Empfang eines Signalblockes wird im übrigen auf das Auftreten der mit diesem übertragenen Blockanfangskennung hin durch ein über die Leitung AK übertragenes Signal ein Übernahmetakt über das UND-Glied G2 an die beiden Register REG5 und Reg6 abgegeben. Diese übernehmen daraufhin jeweils den noch von ihrem zugehörigen Zähler als Anfangszählerstand für eine weitere Aufnahme von Signalblöcken abgegebenen momentanen Zählerstand.

Wird aufgrund der Aufnahme von Signalblöcken in den Schreib-/Lese-Speicher RAM und einer noch nicht erfolgten Übernahme in die Einheit SU/TU ein vorgegebener Zählerstand, welcher den maximalen Füllstand des Schreib-Lese-Speichers anzeigt, erreicht, so wird von dem Decodierer DEC her ein Meldesignal an die Empfangssteuerung EPS abgegeben, die daraufhin über die Leitung F ein Setzsignal für die Freigabe der Setzeingänge der Zähler SZ und IZ überträgt. Damit werden die in die Register Reg5 und Reg6 zu Beginn des gerade empfangenen Signalblockes übertragenen Anfangszählerstände in die Zähler SZ und IZ übernommen, d.h. die Speicherzellen des Schreib-/-Speichers RAM, die bereits durch Signale des nicht vollständig aufnehmbaren Signalblockes belegt worden sind, werden wieder freigegeben. Außerdem wird die Aufnahme des gerade empfangenen Signalblockes in den Schreib-/Lese-Speicher beendet. Dies erfolgt durch Sperren des UND-Gliedes G1 aufgrund eines über die Leitung ANF übertragenen Steuersignals. Die nicht vollständige Aufnahme eines Signalblockes wird im übrigen auch über die Leitung F dem in Figur 2 dargestellten Zustandsregister ZReg signalisiert, das daraufhin an die mit dem gerade empfangenen Signalblock übertragene Senderadresse ein entsprechendes Quittungssignal anfügt.

In Figur 4 ist der Aufbau der Empfangssteuerung EPS dargestellt. Diese enthält zwei Vergleicheranordnungen Vg11 und Vg12 für den Vergleich der in einem Signalblock zusammen mit der Blockanfangskennung übertragenen Empfängeradresse bzw. der zusammen mit einem Quittungssignal übertragenen Senderadresse mit einer der zugehörigen Steuereinrichtung innerhalb der Ringleitungsanordnung zugewiesenen Adresse. Die Vergleicheranordnung Vg11 dient dabei für einen Adressenvergleich bei Empfang eines lediglich für eine der Steuereinrichtungen bestimmten Signalblockes und bei Empfang eines Quittungssignals. Die Vergleicheranordnung VGL2 dient dagegen für den Adressenvergleich bei Empfang eines für eine Gruppe von Steuereinrichtungen bestimmten Signalblockes. Die für den jeweiligen Vergleich heranzuziehende Vergleichsadresse wird von einer mit der Vergleicheranordnung Vgl1 bzw. Vg12 verbundenen, als Schalteranordnung dargestellten Anordnung S1 bzw. S2 bereitgestellt. Bei diesen Anordnungen kann es sich dabei um beliebige Speichereinrichtungen handeln. Die für einen Adressenvergleich jeweils heranzuziehende Vergleicheranordnung wird im übrigen durch ein Signal auf der Leitung GA gesteuert. Dieses Signal ist Bestandteil der eine Gruppe von Steuereinrichtungen bezeichnenden Empfängeradresse und bezeichnet diese als solche.

Die Ausgänge der beiden Vergleicheranordnungen sind über ein ODER-Glied G5 mit einem der Adresseneingänge eines Festwertspeichers PROM verbunden. Weitere Adresseneingänge dieses Speichers stehen mit einer die Blockanfangskennung führenden Leitung AK, einer die Blockendekennung führenden Leitung EK2, den Leitungen SUE, BC und mit dem Ausgang der Vergleicheranordnung Vgl2 in Verbindung. Die beiden Leitungen AK und EK2 sind dabei der Leitungsanordnung ED zugehörig.

Der Festwertspeicher PROM weist eine Mehrzahl von Speicherplätzen auf, in welchen sämtliche Steuersignale für die Behandlung von empfangenen Signalblöcken und Quittungssignalen gespeichert sind. Mit seinen Datenausgängen ist dieser Festwertspeicher mit einem Register Reg7 verbunden. Dieses Register steht über Datenausgänge mit den bereits in Figur 2 dargestellten Leitungen ANF, QE, QD, QK, TL und F in Verbindung. Ein Datenausgang ist außerdem noch an einen ersten Steuereingang eines Registers Reg8 angeschlossen. Mit einem Takteingang ist das Register Reg7 schließlich noch mit der Leitung T verbunden.

Ein zweiter Steuereingang des Registers Reg8 ist mit der in Figur 2 bereits dargestellten Leitung BC verbunden. Eingangsseitig steht dieses Register mit der Leitungsanordnung ED und ausgangsseitig mit der Leitungsanordnung ED' in Verbindung.

Je nach den Signalen, die der Festwertspeicher PROM gerade an seinen Adresseneingängen zugeführt erhält, gibt er ein diesen Signalen entsprechendes Steuersignal ab, welches von dem Register Reg7 übernommen und an die in Frage kommende Leitung abgegeben wird. Die Wirkung der auf den Leitungen ANF, QE QD, QK, TL und F auftretenden Steuersignale ist bereits unter Bezugnahme auf die Figur 2 erläutert worden.

Über das Register Reg8 wird jeder der von der zugehörigen Steuereinrichtung empfangenen Signalblöcke an die in der Ringleitungsanordnung nachfolgende Steuereinrichtung weitergeleitet. Bei diesem Weiterleiten erfolgt gegebenenfalls eine Behandlung des betreffenden Signalblockes hinsichtlich der in ihm enthaltenen Blockanfangskennung und Blockendekennung. Die Behandlung besteht dabei, wie bereits oben erwähnt, darin, daß, abhängig von der Art des gerade weiterzuleitenden Signalblockes, die Blockanfangskennung, die Blockendekennung oder beide Kennungen gelöscht werden.

## Ansprüche

1. Verfahren zum Übertragen von Datensignalen zwischen über ein taktgesteuertes, richtungsabhängig betriebenes Ringleitungssystem (RING0, RING1) miteinander verbundenen Steuereinrichtungen (SUO, RA;...; SUn, RA; TUO, RA; ...; TUm, RA), die insbesondere durch Steuereinrichtungen eines Datenvermittlungssystems gebildet sind, wobei von einer Steuereinrichtung her an eine Mehrzahl von zu einer Gruppe gehörenden Steuereinrichtungen abzugebende Datensignale abschnittweise von Steuereinrichtung zu Steuereinrichtung in Form eines Signalblockes zusammen mit einer die betreffende Gruppe von Steuereinrichtungen als Empfänger bezeichnenden, den Datensignalen vorangestellten und durch eine Blockanfangskennung gekennzeichneten Empfängeradresse und einem am Ende des Signalblockes auftretenden, durch eine Blockendekennung gekennzeichneten vorbereiteten Quittungsfeld übertragen werden und wobei von einer als Empfänger ausgewählten Steuereinrichtung auf das Auftreten eines für diese bestimmten Signalblockes hin dieser kopiert und der Signalblock selbst unter Eintragen eines Quittungssignals in das Quittungsfeld an die im Ringleitungssystem folgende Steuereinrichtung weitergeleitet wird,

**dadurch gekennzeichnet,**

daß von einer sendenden Steuereinrichtung aus ein Signalblock mit einem für die Aufnahme lediglich eines Quittungssignals ausgelegten, nach der Blockendekennung auftretenden Quittungsfeld abgegeben wird, daß durch die erste der zu der Gruppe gehörenden Steuereinrichtungen in den weitergeleiteten Signalblock die bisherige Blockendekennung gelöscht, ein auf die betreffende Steuereinrichtung sich beziehendes Quittungssignal in das Quittungsfeld eingetragen und dieses Quittungssignal durch eine neue der genannten Blockendekennung entsprechende Blockendekennung als Blockende gekennzeichnet wird, daß durch jede der betreffenden Steuereinrichtung folgenden, zu der Gruppe gehörenden Steuereinrichtungen in den weitergeleiteten Signalblock die bisherige Blockendekennung gelöscht, das Quittungsfeld durch ein auf die jeweilige Steuereinrichtung sich beziehendes, an das zuletzt eingetragene Quittungssignal angefügtes Quittungssignal erweitert und das gerade angefügte Quittungssignal durch eine neue der gerade gelöschten Blockendekennung entsprechende Blockendekennung als Blockende gekennzeichnet wird und daß der das Quittungsfeld enthaltende Signalblock von der Steuereinrichtung, von der der Signalblock ursprünglich abgegeben worden ist, für eine Auswertung der in dem Quittungsfeld enthaltenen Quittungssignale kopiert und unter Weglassen der Blockanfangskennung und der Blockendekennung an die im Ringleitungssystem folgende Steuereinrichtung weitergeleitet wird.

2. Verfahren nach Anspruch 1
**dadurch gekennzeichnet,**
daß durch die Empfängeradresse sämtliche zu dem Ringleitungssystem gehörenden Steuereinrichtungen bezeichnet werden.

3. Verfahren nach Anspruch 1
**dadurch gekennzeichnet,**
daß durch die Empfängeradresse lediglich ein Teil der zu dem Ringleitungssystem gehörenden Steuereinrichtungen bezeichnet wird.

4. Schaltungsanordnung zur Durchführung des Verfahrens nach Anspruch 1,
**dadurch gekennzeichnet,**
daß jede der Steuereinrichtungen einen Empfangsspeicher (EP) für die Aufnahme mindestens eines Signalblockes aufweist,
daß mit dem Empfangsspeicher eine Empfangssteuerung (EPS, ZReg) verbunden ist, welche auf das Auftreten einer Blockanfangskennung und einer die der jeweiligen Steuereinrichtung zugehörige Gruppe bezeichnenden Empfängeradresse hin einerseits das Kopieren des gerade empfangenen Signalblockes in den Empfangsspeicher und andererseits das Weiterleiten des Signalblockes an die im Ringleitungssystem folgende Steuereinrichtung unter Weglassen seiner bisherigen Blockendekennung und unter Anfügen eines Quittungssignals und einer der genannten Blockendekennung entsprechenden Blockendekennung steuert,
und daß die Empfangssteuerung (EPS, ZReg) auf die Abgabe eines Signalblockes durch die zugehörige Steuereinrichtung hin bei Empfang des durch die Quittungssignale ergänzten Signalblockes dessen Kopieren in den Empfangsspeicher (EP) steuert und den gerade empfangenen Signalblock unter Weglassen der Blockanfangskennung und der Blockendekennung an die im Ringleitungssystem folgende Steuereinrichtung weiterleitet.

5. Schaltungsanordnung nach Anspruch 4,
**dadurch gekennzeichnet,**
daß der Empfangsspeicher (EP) einen Schreib-/Lese-Speicher (RAM) mit einer Mehrzahl von Speicherzellen für die Aufnahme mindestens eines Signalblockes einschließlich der zugehörigen Blockendekennung aufweist,
daß mit dem Schreib-/Lese-Speicher eine erste Zähleranordnung (SZ, Reg5) verbunden ist, welche die genannten Speicherzellen für die Aufnahme eines empfangenen Signalblockes, ausgehend von einem vorgegebenen Anfangszählerstand, nach Maßgabe eines mit einem der Übertragungsgeschwindigkeit des Ringleitungssystems entsprechenden Schreibtakt sich ändernden Zählerstandes fortlaufend bis zum Auftreten der Blockendekennung adressiert, und daß eine zweite Zähleranordnung (LZ) vorgesehen ist, welche, ausgehend von einem vorgegebenen Anfangszählerstand, durch eine mit einem der Arbeitsgeschwindigkeit der jeweiligen Steuereinrichtung entsprechenden Lesetakt fortschreitende Veränderung ihres Zählerstandes ein Auslesen eines in den Speicherzellen des Schreib-/Lese-Speichers (RAM) gespeicherten Signalblockes bis zum Auftreten der in diesem enthaltenen Blockendekennung (E) ermöglicht.

6. Schaltungsanordnung nach Anspruch 5,
**dadurch gekennzeichnet,**
daß die Speicherzellen des Schreib-/Lese-Speichers (RAM) für die Aufnahme bzw. Abgabe aufeinanderfolgender Signalblöcke von der ersten Zähleranordnung (SZ, Reg5) bzw. der zweiten Zähleranordnung (LZ) her umlaufend adressierbar sind, und daß der Anfangszählerstand der ersten Zähleranordnung bzw. der zweiten Zähleranordnung vor der Aufnahme eines ersten Signalblockes in den Schreib-/Lese-Speicher bzw. vor dem Auslesen dieses Signalblockes aus dem Schreib-/Lese-Speicher durch einen für beide Zähleranordnungen gleich festgelegten Grundzählerstand und bei der Aufnahme bzw. bei Auslesen eines diesem ersten Signalblock folgenden Signalblock durch den nach Auftreten der dem vorangegangenen Signalblock zugehörigen Blockendekennung jeweils anstehenden momentanen Zählerstand gegeben ist.

7. Schaltungsanordnung nach Anspruch 6,
**dadurch gekennzeichnet,**
daß eine dritte Zähleranordnung (IZ, Reg6) mit einem Vor-/Rückwärtszähler (IZ) vorgesehen ist, welcher, ausgehend von einem den Leerzustand des Schreib-/Lese-Speichers (RAM) anzeigenden Anfangszählerstand, mit jedem Auftreten eines Schreibtaktes seinen momentanen Zählerstand in der einen Zählrichtung und mit jedem Auftreten eines Lesetaktes seinen momentanen Zählerstand in der anderen Richtung verändert und welcher bei Erreichen eines vorgegebenen Endzählerstandes ein den maximalen Füllzustand des Schreib-/Lese-Speichers anzeigendes Meldesignal abgibt,

und daß auf das Auftreten dieses Meldesignals hin einerseits die erste Zähleranordnung (SZ, Reg5) wieder den vor der Aufnahme des gerade empfangenen Signalblockes von ihr bereitgestellten Anfangszählerstand annimmt und andererseits die dritte Zähleranordnung (IZ, Reg6) ihren momentanen Zählerstand derart ändert, daß dieser dem Füllzustand des Schreib-/Lese-Speichers (RAM) vor der Aufnahme des gerade empfangenen Signalblokkes entspricht.

8. Schaltungsanordnung nach Anspruch 7, **dadurch gekennzeichnet,**
daß die erste Zähleranordnung (SZ, Reg5) und die dritte Zähleranordnung (IZ, Reg6) jeweils ein Register (Reg5 bzw. Reg6) aufweisen, in welches auf das Auftreten einer Blockanfangskennung hin der von der zugehörigen Zähleranordnung gerade bereitgestellte momentane Zählerstand einschreibbar ist,

und daß die beiden Zähleranordnungen den in ihrem zugehörigen Register eingetragenen Zählerstand auf das Auftreten eines den maximalen Füllzustand des Schreib-/Lese-Speichers anzeigenden Meldesignals hin als Anfangszählerstand übernehmen.

9. Schaltungsanordnung nach einem der Ansprüche 4 bis 8, **dadurch gekennzeichnet,**
daß die Empfangssteuerung (EPS, ZReg) eine Vergleicheranordnung (VGL2) für einen Vergleich einer eine Gruppe von Steuereinrichtungen bezeichnenden Emfängeradresse mit einer der jeweiligen Steuereinrichtung zugehörigen Gruppe zugewiesenen Adresse aufweist,

daß mit der Vergleicheranordnung eine Speicheranordnung (PROM, Reg7) mit einer Mehrzahl von Speicherzellen verbunden ist, in welchen sämtliche Steuersignale für die Behandlung von empfangenen Signalblöcken gespeichert sind,

daß die Speicheranordnung für eine Ansteuerung der jeweils in Frage kommenden Speicherzelle von der Vergleicheranordnung (Vgl2) abgegebene Vergleichersignale und das Auftreten von Blockanfangskennung und Blockendekennung anzeigende Signale als Adressensignale zugeführt erhält und daß nach Maßgabe des von der Speicheranordnung (PROM, Reg7) gerade bereitgestellten Steuersignals eine Behandlung des empfangenen Signalblokkes erfolgt.

## Claims

1. Method for transmitting data signals between control devices (SUO, RA;...; SUn, RA; TUO, RA;...; TUm, RA), which are connected to one another via a clock-controlled direction - dependently operated loop network (RING0, RING1) and which, in particular, are formed by control devices of a data switching system, in which method data signals to be delivered from one control device to a plurality of control devices belonging to a group are transmitted section by section from control device to control device in the form of a signal block together with a receiver address designating the relevant group of control devices as receiver and preceding the data signals and identified by a block start identification and with a prepared acknowledgement field occurring at the end of the signal block and identified by a block end identification and in which method a control device selected as receiver, following the occurrence of a signal block intended for it, copies the latter and the signal block itself is forwarded to the following control device in the loop network, with an acknowledgement signal being entered into the acknowledgement field, characterised in that from a transmitting control device, a signal block with an acknowledgement field designed for accepting only one acknowledgement signal and occurring after the block end identification is emitted, in that the previous block end identification is deleted in the forwarded signal block by the first of the control devices belonging to the group, an acknowledgement signal relating to the relevant control device is entered into the acknowledgement field and this acknowledgement signal is identified as block end by a new block end identification corresponding to the said block end identification, in that the previous block end identification is deleted in the forwarded signal block by each of the control devices following the relevant control device and belonging to the group, the acknowledgement field is expanded by an acknowledgement signal relating to the respective control device and added to the acknowledgement signal last entered and the acknowledgement signal just added is identified as block end by a new block end identification corresponding to the block end identification just deleted, and in that the signal block containing the acknowledgement field is copied by the control device by which the signal block has been originally emitted, for an evaluation of the acknowledgement signals contained in the acknowledgement field, and is forwarded to the following control device in the loop network, omitting the block start identification and the block end identification.

2. Method according to Claim 1, characterised in that all control devices belonging to the loop network are designated by the receiver address.

3. Method according to Claim 1, characterised in that only a part of the control devices belonging to the loop network is designated by the receiver address.

4. Circuit arrangement for carrying out the method according to Claim 1, characterised in that each of the control devices exhibits a receive store (EP) for accepting at least one signal block, in that the receive store is connected to a receive control (EPS, ZReg) which, following the occurrence of a block start identification and a receiver address designating the group belonging to the respective control device, controls, on the one hand, the copying of the signal block just received into the receive store and, on the other hand, the forwarding of the signal block to the following control device in the loop network, with omission of its previous block end identification and with addition of an acknowledgement signal and a block end identification corresponding to the said block end identification, and in that the receive control (EPS, ZReg) following the emission of a signal block by the associated control device controls, on reception of the signal block supplemented by the acknowledgement signals, its copying into the receive store (EP) and forwards the signal block just received to the following control device in the loop network with omission of the block start identification and the block end identification.

5. Circuit arrangement according to Claim 4, characterised in that the receive store (EP) exhibits a randomaccess memory (RAM) having a plurality of storage cells for accepting at least one signal block including the associated block end identification, in that the random-access memory is connected to a first counter arrangement (SZ, Reg5) which addresses the said storage cells for the acceptance of a received signal block, starting from a predetermined initial count, determined by a count changing with a write clock corresponding to the transmission rate of the loop network, continuously until the block end identification occurs, and in that a second counter arrangement (LZ) is provided which, starting from a predetermined initial count, enables, by means of a change of its count progressing with a read clock corresponding to the operating rate of the respective control device, a signal block stored in the storage cells of the random-access memory (RAM) to be read out until the block end identification (E) contained in it occurs.

6. Circuit arrangement according to Claim 5, characterised in that the storage cells of the random-access memory (RAM) can be addressed in circulating manner by the first counter arrangement (SZ, Reg5) and, respectively, the second counter arrangement (LZ) for the acceptance, and, respectively, outputting of successive signal blocks and in that the initial count of the first counter arrangement and, respectively, of the second counter arrangement, before the acceptance of a first signal block into the random-access memory and, respectively, before the reading-out of this signal block out of the random-access memory, is given by a basic count equally determined for both counter arrangements and by the instantaneous count present in each case after the occurrence of the block end identification associated with the preceding signal block with the acceptance, and, respectively, with the reading-out of a signal block following this first signal block.

7. Circuit arrangement according to Claim 6, characterised in that a third counter arrangement (IZ, Reg6) comprising an up/down counter (IZ) is provided which, starting with an initial count indicating the empty state of the random-access memory (RAM), changes its instantaneous count in one direction of counting with each occurrence of a write clock and changes its instantaneous count in the other direction with each occurrence of a read clock and which, when a predetermined final count has been reached, emits an indicating signal indicating the maximum loading state of the random-access memory, and in that, following the occurrence of this indicating signal, on the one hand the first counter arrangement (SZ, Reg5) again assumes the initial count provided by it before the acceptance of the signal block just received and, on the other hand, the third counter arrangement (IZ, Reg6) changes its instantaneous count in such a manner that the latter corresponds to the loading state of the random-access memory (RAM) before the acceptance of the signal block just received.

8. Circuit arrangement according to Claim 7, characterised in that the first counter arrangement (SZ, Reg5) and the third counter arrangement (IZ, Reg6) in each case exhibit a register (Reg5 and, respectively Reg6) into which the instantaneous count just provided by the associated counter arrangement can be entered following the occurrence of a block start identification, and in that the two counter arrangements take over as initial count the count entered in their associated register following the occurrence of an indicating signal indicating the maximum loading state of the random-access memory.

9. Circuit arrangement according to one of Claims 4 to 8, characterised in that the receive control (EPS, ZReg) exhibits a comparator arrangement (Vg12) for comparing a receiver address designating a group of control devices with an address allocated to the group associated with the respective control device, in that the comparator arrangement is connected to a storage arrangement (PROM, Reg7) having a plurality of storage cells in which all control signals for treating received signal blocks are stored, in that the storage arrangement receives comparator signals emitted by the comparator arrangement (Vg12) for activating the respective storage cell concerned and is supplied with signals indicating the occurrence of block start identification and block end identification as address signals and in that the received signal block is treated as determined by the control signal just provided by the storage arrangement (PROM, Reg7).

**Revendications**

1. Procédé pour transmettre des signaux de données entre des dispositifs de commande (SUO, RA;...; SUn,RA; TUO, RA;...; TUm, RA), qui sont reliés entre eux par l'intermédiaire d'un système de lignes en anneau (RING0, RING1), commandé de façon cadencée et opérant en fonction du sens de transmission, et qui sont formés notamment par des dispositifs de commande d'un système de commutation de données, et selon lequel des signaux de données devant être délivrés par un dispositif de commmande à une multiplicité de dispositifs de commande faisant partie d'un groupe sont transmis, par sections, d'un dispositif de commande à un autre, sous la forme d'un bloc de signaux conjointement avec une adresse de récepteur qui désigne le groupe considéré de dispositifs de commande en tant que récepteur, précède les signaux de données et est caractérisé par un indicatif de début de bloc, et avec une zone préparée d'accusé de réception, qui apparaît à la fin d'un bloc de signaux et est caractérisée par l'indicatif de fin de bloc, et selon lequel lors de l'apparition d'un bloc de signaux destiné à un dispositif de commande sélectionné en tant que récepteur, ce dispositif copie ce bloc et le bloc de signaux lui-même est retransmis, moyennant l'insertion d'un signal d'accusé de réception dans la zone d'accusé de réception, au dispositif de commande situé en aval dans le système de lignes en anneau,

caractérisé par le fait

qu'un bloc de signaux comportant une zone d'accusé de réception conçue pour la réception uniquement d'un signal d'accusé de réception et apparaissant après l'indicatif de fin de bloc, est délivré par un dispositif de commande émetteur,

que l'indicatif de fin de bloc présent jusqu'alors est effacé par le premier des dispositifs de commande faisant partie du groupe, dans le bloc de signaux retransmis, qu'un signal d'accusé de réception concernant le dispositif de commande considéré est inséré dans la zone d'accusé de réception et que ce signal d'accusé de réception est caractérisé en tant que fin de bloc par un nouvel indicatif de fin de bloc correspondant audit indicatif de fin de bloc,

que chacun des dispositifs de commande qui succèdent au dispositif de commande considéré et font partie du groupe, efface, dans le bloc de signaux retransmis, l'indicatif de fin de bloc présent jusqu'alors, que la zone d'accusé de réception est accrue d'un signal d'accusé de réception se rapportant au dispositif de commande considéré et ajouté au signal d'accusé de réception introduit en dernier lieu et que le signal d'accusé de réception précisément ajouté est caractérisé, en tant que fin de bloc, par un nouvel indicatif de fin de bloc correspondant à l'indicatif de fin de bloc précisément effacé, et

que le bloc de signaux contenant la zone d'accusé de réception est copié par le dispositif de commande qui a délivré initialement le bloc de signaux, pour une évaluation des signaux d'accusé de réception contenus dans la zone d'accusé de réception, et est retransmis, moyennant la suppression de l'indicatif de début de bloc et de l'indicatif de fin de bloc, au dispositif de commande suivant dans le système de lignes en anneau.

2. Procédé selon la revendication 1, caractérisé par le fait que tous les dispositifs de commande faisant partie du système de lignes en anneau sont désignés par l'adresse du récepteur.

3. Procédé suivant la revendication 1, caractérisé par le fait que seule une partie des dispositifs de commande appartenant au système de lignes en anneau est désignée par l'adresse du récepteur.

4. Montage pour la mise en oeuvre du procédé suivant la revendication 1, caractérisé par le fait que chacun des dispositifs de commande comporte une mémoire de réception (EP) pour la réception d'au moins un bloc de signaux, qu'à la mémoire de réception est raccordé un dispositif de commande de réception (EPS, ZReg), qui, lors de l'apparition d'un indicatif de début de bloc et d'une adresse de récepteur désignant le groupe associé au dispositif de commande respectif, commande, d'une part, le copiage du bloc de signaux précisément reçus, dans la mémoire de réception, et, d'autre part, la retransmission du bloc de signaux au dispositif de commande suivant dans le système de lignes en anneau, moyennant la suppression de son indicatif de fin de bloc présent jusqu'alors et moyennant l'adjonction d'un signal d'accusé de réception et d'un indicatif de fin de bloc correspondant audit indicatif de fin de bloc, et
que, lors de la délivrance d'un bloc de signaux par le dispositif de commande associé, le dispositif de commande de réception (EPS, ZReg) commande, lors de la réception du bloc de signaux complété par les signaux d'accusé de réception, le copiage de ce bloc dans la mémoire de réception (EP) et retransmet le bloc de signaux précisément reçu au dispositif de commande suivant dans le système de lignes en anneau, moyennant la suppression de l'indicatif de début de bloc et de l'indicatif de fin de bloc.

5. Montage suivant la revendication 4, caractérisé par le fait que la mémoire de réception (EP) comporte une mémoire d'enregistrement/lecture (RAM) pourvue d'une multiplicité de cellules de mémoire servant à recevoir au moins un bloc de signaux, y compris l'indicatif associé de fin de bloc, qu'à la mémoire d'enregistrement/lecture est raccordé un premier dispositif de comptage (ZS, Reg5), qui adresse en permanence, jusqu'à l'apparition de l'indicatif de fin de bloc, lesdites cellules de mémoire pour la réception d'un bloc de signaux reçu, à partir d'un état de comptage initial prédéterminé, en fonction d'un état de comptage qui varie avec une cadence d'enregistrement correspondant à la vitesse de transmission du système de lignes en anneau, et
il est prévu un second dispositif de comptage (LZ) qui, à partir d'un état de comptage initial prédéterminé, permet, grâce à une modification de son état de comptage qui se poursuit avec une cadence de lecture correspondant à la vitesse de travail du dispositif de commande respectif, une lecture d'un bloc de signaux mémorisé dans les cellules de mémoire de la mémoire d'enregistrement/lecture (RAM), jusqu'à l'apparition de l'indicatif de fin de bloc (E) contenu dans ce bloc.

6. Montage suivant la revendication 5, caractérisé par le fait que les cellules de mémoire de la mémoire d'enregistrement/lecture (RAM) peuvent être adressées cycliquement pour la réception et la délivrance de blocs de signaux successifs par le premier dispositif de comptage (SZ, Reg5) ou par le second dispositif de comptage (LZ), et que l'état initial de comptage du premier dispositif de comptage ou du second dispositif de comptage est déterminé par un état de comptage de base situé à une même valeur pour les deux dispositifs de comptage, avant la réception d'un premier bloc de signaux dans la mémoire d'enregistrement/lecture ou avant la lecture de ce bloc de signaux à partir de cette mémoire, et est déterminé l'état de comptage instantané présent respectivement après l'apparition de l'indicatif de fin de bloc associé au bloc de signaux précédents, lors de la réception ou de la lecture d'un bloc de signaux succédant à ce premier bloc de signaux.

7. Montage suivant la revendication 6, caractérisé par le fait qu'il est prévu un troisième dispositif de comptage (IZ, Reg6) comportant un compteur progressif/ régressif (IZ), qui, à partir d'un état de comptage initial indiquant l'état vide de la mémoire d'enregistrement/lecture (RAM), délivre son état de comptage instantané dans une direction de comptage, lors de l'apparition d'une cadence d'enregistrement, et modifie son état de comptage instantané dans l'autre direction, lors de l'apparition d'une cadence de lecture, et qui, lorsqu'un état de comptage final prédéterminé est atteint, délivre un signal de signalisation indiquant l'état de remplissage maximum de la mémoire d'enregistrement/lecture, et
que lors de l'apparition de ce signal de signalisation, d'une part, le premier dispositif de comptage (RZ, Reg5) prend à nouveau l'état de comptage initial qu'il possédait avant la réception du bloc de signaux précisément reçus, et, que d'autre part, le troisième dispositif de comptage (IZ, Reg6) modifie son état de comptage instantané de telle sorte que cet état correspond à l'état de remplissage de la mémoire d'enregistrement/lecture (RAM) avant la réception du bloc de signaux précisément reçu.

8. Montage suivant la revendication 7, caractérisé par le fait

que le premier dispositif de comptage (SZ, Reg5) et le troisième dispositif de comptage (IZ, Reg6) possèdent chacun un registre (Reg5 ou Reg6) dans lequel l'état de comptage instantané précisément fourni par le dispositif de comptage associé peut être enregistré lors de l'apparition d'un indicatif de début de bloc, et

que les deux dispositifs de comptage transfèrent leur état de comptage enregistré, dans le registre qui leur est associé, en tant qu'état de comptage initial lors de l'apparition d'un signal de signalisation indiquant l'état de remplissage maximum de la mémoire d'enregistrement/lecture.

9. Montage suivant l'une des revendications 4 à 8, caractérisé par le fait

que le dispositif de commande de réception (EPS, ZReg) comporte un dispositif comparateur (VGL2) servant à réaliser la comparaison entre une adresse de récepteur, caractérisant un groupe de dispositifs de commande, et une adresse affectée au groupe associé au dispositif de commande respectif,

qu'au dispositif comparateur est raccordé un dispositif de mémoire (PROM, Reg7) possédant une multiplicité de cellules de mémoire dans lesquelles sont mémorisés tous les signaux de commande pour le traitement de blocs de signaux reçus,

que le dispositif de mémoire reçoit, en tant que signaux d'adresses, pour une commande de la cellule de mémoire considérée, des signaux de comparaison délivrés par le dispositif comparateur (Vg12) et des signaux indiquant l'apparition de l'indicatif de début de bloc et de l'indicatif de fin de bloc, et qu'un traitement du bloc reçu de signaux est réalisé en fonction du signal de commande précisément préparé par le dispositif de mémoire (PROM, Reg7).

# FIG 1

EP 0 215 276 B1

# FIG 2

FIG 3

EP 0 215 276 B1

# FIG 4

19

# FIG 5

**a)**

| A | E | |
|---|---|---|
| 1 | 0 | EADR |
| 0 | 0 | DS1 |
| | | . |
| | | . |
| | | . |
| 0 | 0 | DSn |
| 0 | 1 | SADR |
| 0 | 0 | LQ |

**b)**

| A | E | | |
|---|---|---|---|
| 0 | 0 | EADR | |
| 0 | 0 | DS1 | |
| | | . | |
| | | . | |
| | | . | |
| 0 | 0 | DSn | |
| 0 | 1 | SADR | |
| 0 | 0 | EADR | QS |

**c)**

| A | E | | |
|---|---|---|---|
| 1 | 0 | EADR | |
| 0 | 0 | DS1 | |
| | | . | |
| | | . | |
| | | . | |
| 0 | 0 | DSn | |
| 0 | 0 | SADR | |
| 0 | 1 | EADR1 | QS1 |

**d)**

| A | E | | |
|---|---|---|---|
| 1 | 0 | EADR | |
| 0 | 0 | DS1 | |
| | | . | |
| | | . | |
| | | . | |
| 0 | 0 | DSn | |
| 0 | 0 | SADR | |
| 0 | 0 | EADR 1 | QS1 |
| 0 | 0 | EADR 2 | QS2 |
| | | . | |
| 0 | 1 | EADRm | QSm |